# EUROPEAN PATENT APPLICATION

(11) **EP 1 110 601 A2**
(43) Date of publication of application: **27.06.2001**
(21) Application number: 00126539.6
(22) Date of filing: 11.12.2000
(51) Int. Cl.: B01J 19/00, B01J 19/18

(54) **Modular reactor system allowing control of particle size during chemical precipitation**

(30) Priority: 22.12.1999 CA 2292862
(71) Applicant: Bayer Inc., Sarnia, ON N7T 7M2 (CA)
(72) Inventor: Koski, Ahti, Wilkesport, Ontario N0P 2R0 (CA); Arsenault, Gilles, Courtright, Ontario N0N 1H0 (CA); Drope, David, Petrolia, Ontario N0N 2R0 (CA)
(74) Representative: Feldhues, Michael L.F., Dr.

(57) **Abstract**

A reactor assembly comprising a substantially elongate tubular housing, at least one reactant inlet, at least one reaction mixture outlet disposed above the at least one reactant inlet, and agitator disposed in a region near the at least one reactant inlet and a perforated member disposed in tubular housing between the agitator and the reaction mixture outlet.

## Description

In one of its aspects, the present invention relates to an improved chemical reactor, especially a reactor for the production of chemical precipitates. In another of its aspects, the present invention also provides a means of reducing the amount of backmixing, thereby providing a means of obtaining a relatively monodisperse distribution of precipitated particles. "Monodisperse" means particles which have a narrow size distribution characterised by the standard deviation about the mean value of their radius. In still another aspect, the invention provides a means of controlling the particle size of the precipitates.

A large number of fine chemicals are produced industrially by precipitation processes. These precipitated materials are often distinct from their natural counterparts where such chemicals are naturally available in that one or more parameters of importance in their end use application may be either more closely controlled or may be changed from what is available from natural sources. As an example, is well known that both particle size and particle size distribution greatly influence optical properties of inorganic pigments. It is thus desirable to optimize the particle size and narrow the spread of the distribution of particle sizes within pigments because these factors influence the gloss, hiding power, tinting strength and lightening power. For each pigment and binder combination, there is an optimum particle size which gives the highest level of tinting strength (UECT, Vol. A20 p.250, 260). This optimum size may be calculated form Mie's Theory (Gustav Mie (1908)).

In rubber goods, the particle size and particle size distribution of fillers such as precipitated silica are also important parameters as these effect such physical properties as the degree of reinforcement and abrasion resistance. Fillers with the smallest particle size offer the best reinforcement and abrasion resistance.

In photography, the size and distribution of crystals of silver chloride within the film determines to a large degree the ultimate resolution that is obtainable in the photograph and determine whether or not the image suffers from 'graininess'.

An outstanding problem in the field of reaction techniques is thus the control of particle size and particle size distribution during precipitation reactions. This problem arises when a re-mixing of reactants and reaction products (so-called *'backmixing'*) produces a wide distribution of particle sizes that may negatively effect subsequent reaction steps in a multistep process, or for a single step process, a product may result that is not optimized for its intended use. The selection of a suitable reaction apparatus to minimize backmixing thus becomes important. Hereinafter, a few common reactor designs shall be briefly discussed.

The first reactor type is a simple vessel (i.e., a tank) equipped with a stirrer, known as a continuous stirred tank reactor (CSTR). This apparatus comprises a vessel in which the stirring elements, e.g., rotating propellers or vane elements are housed. Reactants are added to this reactor either simultaneously or sequentially, either through the top or from ports within the vessel. It is possible to attain an excellent degree of mixing as long as the size of the vessel remains relatively small. As the vessel size increases, maintaining a uniform distribution of reactants becomes difficult and in practice, tank volumes are restricted to less than 100 cubic meters in size. However, as both the starting components and the resulting final product are simultaneously present in the same vessel and are being continuously mixed with each other, backmixing thereof is unavoidable, as it is inherent in the technical design of the reactor. The distribution of product sizes obtained from use of such a reactor is of necessity broad owing to the range of product ages; i.e., species are present in the product mix that have been initiated at different times.

A second type of reactor frequently used for precipitation is the tubular reactor which comprises a vertically oriented cylindrical tube into which the reactants are introduced at one end thereof. Due to the continuous flow into the tube, the starting components are pushed through the tube as they react, while the resulting products leave the tube at the other end thereof. As the continuous flow of subsequent components pushes those already in the tube ahead of them, backmixing is relatively minor. Tubular reactors are thus used to minimize mixing of the reactants in the direction of flow. As a result, reactant concentration will vary along the reactor length. On the other hand, due to the laminar flow of the substances through the tube, axial mixing of the same is not particularly satisfactory. Likewise, where reactions are slow or an induction period precedes any significant degree of reaction, or where diffusion of the reactants is limited by viscosity of the bulk, very long tubes may be needed to guarantee the necessary residence time for completing the reaction.

A third type of reactor has elements of both the CSTR and the tubular reactor and is known as a continuous flow stirred tank reactor (CFSTR). In this design, reactants continuously enter the reactor and products concurrently leave the reactor. The product which is resident in the reactor at any instant is thus blended with the incoming feed to produce a solution of essentially uniform composition everywhere in the reactor. Consequently, the growing particles of precipitate in a portion of the reaction mixture will have a variety of ages and thus a single CFSTR is not suitable for obtaining narrow distributions of particle sizes. Moreover, when the time required to completely fill such CFSTRs becomes significant with respect to the reaction rate, a long interval is needed to attain steady-state operation.

A hybrid combination of a tubular reactor and stirrer-equipped vessel may also be provided by subdividing the tubular reactor into a plurality of mixing regions, each of which is designed as a stirrer-equipped vessel. These are arranged as a series of cascades, wherein the components do not remain stationary in the stirrer-equipped chambers during mixing, but flow through the same. However, this combination suffers from several drawbacks. Centrifugal forces generated by the stirrer element may cause a sedimentation of particles. Furthermore, the angular velocity of the stirrer element is not the same at all points, but is smallest near the driving shaft of the stirrer so that no uniform mixing can be attained. As a further drawback the component parts of the reactor are difficult to clean.

Further reactors have been described, for instance, in the French patent publication No. 2,321,513, the German patent publication No. 1,125,175, and the U.S. Pat. Nos. 3,716,590 and 4,268,437. These known reactors are badly suited or completely unsuitable for carrying out precipitation reactions.

Tubular reactors are well known and are designed to minimize mixing of the reactants in the direction of flow. As a result, reactant concentration will vary along the reactor length. In contrast, the reaction mixture in a continuous flow stirred tank reactor (CFSTR) is blended with the incoming feed to produce a solution of essentially uniform composition everywhere in the reactor. Consequently, the particles will have a variety of ages and residence times. Since particle size and age are directly related, a single CFSTR is not suitable for the producing narrow parrticle size distributions. However, it is well known that 3 or more stirred tanks in series with all of the catalyst fed to the first reactor can approximate the performance of a tubular reactor.

A large number of fine chemicals are produced industrially by precipitation processes. These precipitated materials are often distinct from their natural counterparts in that one or more parameters of importance in their end use application may be either more closely controlled or may be changed from what is available from natural sources. As an example, is well known that both particle size and particle size distribution greatly influence tinting strength or hiding power of paint pigments. Many industrially important pigments are produced by precipitation techniques (see Ullman's Encyclopaedia of Chemical Technology, Vol. A20, pages 243-369.) However, control of particle size distribution is difficult with a large CST reactor because of the difficulty in achieving an instantaneous uniform distribution of reactants. Likewise, it is difficult to evenly coat particle substrates with surface agents. An even coating is often desirable, i.e., in the case of catalyst particles. With a large reactor, it is also difficult to change the temperature of the reaction medium in a short time; often this is desirable in order to prevent side reactions and to produce the maximum amount of product in a timely manner.

It is an object of the present invention to obviate or mitigate at least one of the above-mentioned disadvantages of the prior art.

This invention relates to a modular tube reactor, which offers the possibility of multiple mixing and reaction zones with extremely low levels of backmixing. It is useful for the preparation of chemical precipitates of narrow aggregate size distribution, and especially those precipitates in which either a "nucleating" or "building" step is involved. Control of primary particle size is also possible by varying the concentration of the reactive species. Alternately, the system may be used to produce narrow distributions of particles via hydrolysis. The new apparatus overcomes these difficulties.

Embodiments of the present invention will be described with reference to the accompanying drawings in which:

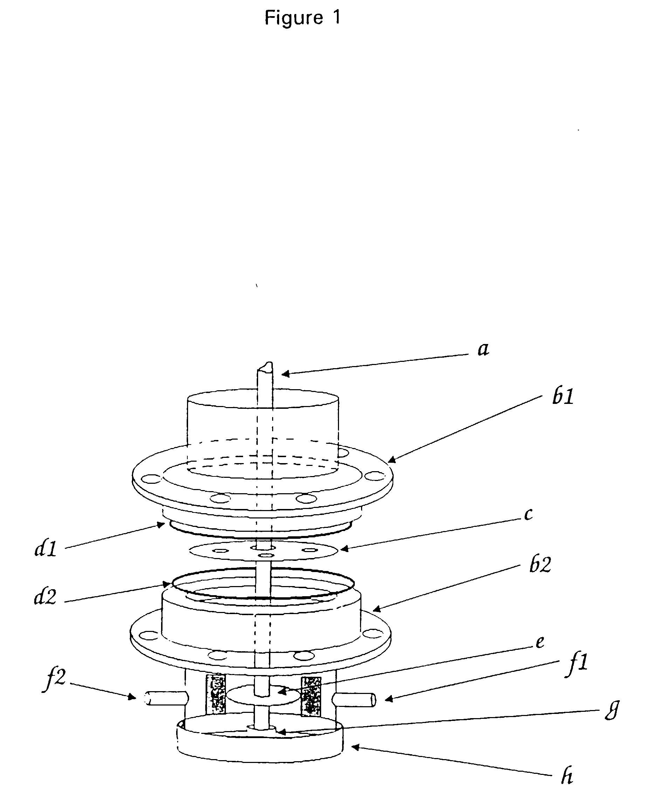

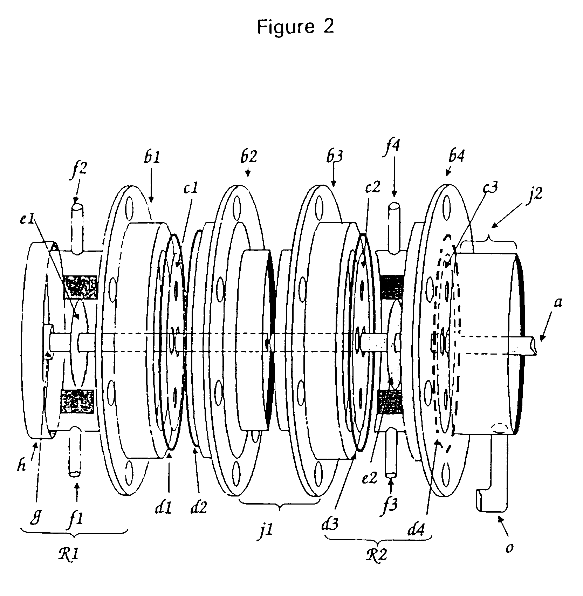

- Figures 1 and 2: each illustrate a schematic of preferred embodiments of the present invention.
- Figure 1: is the base module, which is the minimum required in the design.

The modular reactor system is of a vertical design wherein the product flow is against gravity. A rotating shaft (a) anchored by means of a steady bearing (g) provides power to drive an impeller (e1). One or more reactants (optionally heated) enter the mixing zone (R1) through one or a plurality of ports; two are shown as (f1) and (f2). Ports are separated by the greatest possible distance as measured along the circumference of the mixing zone. A single baffle (q) or a plurality of baffles may be included within R1 to improve turbulent mixing. An end cap (h) ensures that the product flow is upward. Backmixing is minimized by the inclusion of a backmixing preventor (c1), which consists of a thin perforated diaphragm of diameter greater than that of the reactor tube. The size of the perforation(s) is such that product may move freely through them but they are not so large as to allow significant backflow of product into the reactor section. The size and number of the perforations that are required are determined by the flow rate of the reactants, the turbulence within the mixing zone and the viscosity of the medium. The backmixing preventor is sealed by two "O" rings (d1) and (d2) which are held in place by means of two bolted flanges (b1) and (b2). The product exits the reaction zone into a quiescent zone j1; the reaction may continue in this zone by means of diffusion of the reactants if it has not previously gone to completion in the mixing zone R1. Optionally, j1 may be heated by means of a jacket or internal coil (not shown). In the simplest set-up, the product may exit j1 by means of an overflow pipe (not shown).

In order to "build" particles (i.e. to grow particles from nuclei at a controlled rate), or to coat particles, the base module may be supplemented by stacking addition modules as shown in Figure 2. (Because of space limitations, Figure 2 is shown horizontally but it is understood that the stacked reactor is vertical.)

In Figure 2, an additional module R2 has been added to that previously shown in Figure 1. The product flowing from R1 by means of the exit tube j1 passes through another backflow preventor (c2) and into the second mixing zone R2. Again, (c2) consists of a thin perforated diaphragm of diameter larger than that of the reactor tube; the size and number of the perforations are such that product may move freely through them but they are not so large as to allow significant backflow of product from R2 into the previous quiescent section (j1). The size and number of the perforations that are required are determined by the flow rate of the reactants, the viscosity of the medium and the degree of turbulence within R2. The backflow preventor is held in place by means of two "O" rings, (d3) and (d4). One or more reagents, or additional medium may enter through one or a plurality of ports; two are shown as (f3) and (f3). Mixing is effected by means of an impeller (e2) connected to the central shaft (a). Optionally, one or more baffles may again be inserted into R2 to assist mixing. A third backflow preventor (c3) prevents reentry of product into the mixing zone R2. Again, (c3) consists of a thin perforated diaphragm of diameter larger than that of the reactor tube; the size of the perforations are such that product may move freely through them but they are not so large as to allow significant backflow of product from j2 into the mixing zone R2. The size of the perforations that are required are determined by the flow rate of the reactants, the viscosity of the medium and the degree of turbulence within R2. The backflow preventor c3 is held in place by two "O" rings (d5) and (d6); only one is shown. R2 is sealed by two boltable flanges (b3) and (b4) which also apply pressure to seal the "O" rings c2 and c3 in place. Product exits R2 by means of a quiescent zone j2, which may be optionally heated or cooled by means of a jacket or internal coil; the length of j2 is such that the precipitation or coating reaction is complete therein. Product is removed from the stacked reactors by means of an overflow pipe (o).

Where extremely narrow particle size distributions are desired, or more than one coating is desired, additional reactors may be stacked in a similar manner.

The tubular reactor device described above may be used to produce silica as described in copending Canadian patent application 2,292,819, filed on even date herewith.

## Claims

1. A reactor assembly comprising a substantially elongate tubular housing, at least one reactant inlet, at least one reaction mixture outlet disposed above the at least one reactant inlet, and agitator disposed in a region near the at least one reactant inlet and a perforated member disposed in tubular housing between the agitator and the reaction mixture outlet.

2. The reactor assembly defined in claim 1, wherein the perforated member is a disc.

3. The reactor assembly defined in claim 1, wherein the perforated member comprises apertures.

4. The reactor assembly defined in claim 1, wherein the perforated member comprises slots.

5. The reactor assembly defined in claim 1, wherein the perforated member occupies substantially the entire cross section of the tubular housing substantially transverse to its longitudinal axis.

6. The reactor assembly defined in claim 1, wherein the reactor assembly comprises a plurality of reactant inlets.

7. The reactor assembly defined in claim 1, comprising a plurality of perforated members.

8. The reactor assembly defined in claim 2, wherein the perforated member occupies substantially the entire cross section of the tubular housing substantially transfers to its longitudinal axis.

9. The reactor assembly defined in claim 8, wherein the perforated member comprises apertures.

10. A modular reaction system comprising a plurality of reactor assemblies as defined in any preceding claim, wherein the reactor assemblies are connected in series.
